# EUROPEAN PATENT APPLICATION

(11) **EP 4 481 882 A1**
(43) Date of publication of application: **25.12.2024**
(21) Application number: 23891869.2
(22) Date of filing: 31.10.2023
(51) Int. Cl.: H01M 10/0585, H01M 50/446, H01M 50/46, H01M 10/052

(54) **LITHIUM SECONDARY BATTERY**

(30) Priority: 18.11.2022 KR 20220155737
(71) Applicant: LG Chem, Ltd., Yeongdeungpo-gu Seoul 07336 (KR)
(72) Inventor: PARK, Sangmin, Daejeon 34122 (KR); KIM, Soyoung, Daejeon 34122 (KR); KIM, Hyunsuk, Daejeon 34122 (KR); JIN, Sun Mi, Daejeon 34122 (KR); LEE, Su Hee, Daejeon 34122 (KR); LEE, Junghyun, Daejeon 34122 (KR); SIM, Hyeyeong, Daejeon 34122 (KR)
(74) Representative: Hoffmann Eitle
(86) International application number: PCT/KR2023/017057
(87) International publication number: WO 2024/106802

(57) **Abstract**

The present invention relates to a lithium ion secondary battery. According to the present invention, an electrode assembly which has excellent adhesion durability without impairing ionic conductivity between electrodes, and a lithium ion secondary battery including the same are provided.

## Description

### [TECHNICAL FIELD]

### CROSS-REFERENCE TO RELATED APPLICATION(S)

This application claims the benefit of Korean Patent Application No. 1 0-2022-0155737 filed on November 18, 2022 in the Korean Intellectual Property Office, the disclosure of which is incorporated herein by reference in its entirety.

The present invention relates to a lithium ion secondary battery.

### [BACKGROUND OF ART]

As mobile phones, notebook computers, tablet computers, mobile batteries, electric vehicles, personal mobility devices, and the like become highly functional, the demand for a secondary battery serving as a driving power source thereof is steadily increasing. Particularly, lithium secondary batteries, which have high operating voltage and high energy density per unit weight, are most frequently used.

A lithium ion secondary battery is configured such that an electrode assembly having a positive electrode/separator/negative electrode structure, which can be charged and discharged, is mounted in a battery case. The positive electrode and the negative electrode are manufactured by coating a slurry containing an electrode active material onto one surface or both surfaces of a metal current collector, followed by drying and rolling.

The separator is one of the most important factors determining the lifespan of a secondary battery, and electrically isolates the positive electrode and the negative electrode. Further, the separator is required to have ion permeability and mechanical strength such that an electrolytic solution can pass smoothly through the separator. As the applications of high-energy lithium secondary batteries are expanded, the safety of the separator at high temperature is also increasingly needed.

A separator comprising a separator substrate, which is conventionally used, and an inorganic coating layer has a problem in that the force of adhesion between the separator and an electrode is not sufficient due to its material characteristics, whereby there is a problem that partial detachment or wrinkles occur at the interface between the electrode and the separator. Polyolefin, which is generally used as the separator substrate, has a problem with thermal stability in which polyolefin melts at a high temperature.

In order to solve these problems, a method of eliminating a polyolefin separator substrate and constructing a separator using only an inorganic coating film has been proposed. However, such a separator still do not have sufficient adhesive force with electrodes, and have extremely low insulating properties, which is thus vulnerable to internal short circuits when applying to an electrochemical device. If an adhesive is applied to the interface between the electrode and the separator in order to supplement the adhesive force between the separator and the electrode, the ionic conductivity between the electrodes may decrease, thus causing a loss of battery capacity. In addition, such a separator have a fatal drawback that the separator is easily torn due to its low tensile strength and drawing rate, and a fine short circuit occurs inside the electrode assembly.

### [DETAILED DESCRIPTION OF THE INVENTION]

### [Technical Problem]

It is an object of the present invention to provide a lithium ion secondary battery with an electrode assembly applied thereto which has excellent adhesion durability without impairing ionic conductivity between electrodes.

### [Technical Solution]

According to one embodiment of the invention, there is provided a lithium ion secondary battery comprising:
a negative electrode portion;
a porous layer formed on at least one surface of the negative electrode portion, and including a polymer binder and inorganic fine particles dispersed in the polymer binder; and
a positive electrode portion bonded onto the porous layer through an adhesive portion arranged continuously or discontinuously,
wherein the adhesive portion includes an ionic conductive polymer, and
wherein the ratio of the area occupied by the adhesive portion is 0.02% to 50% based on the area of one surface of the positive electrode portion.

Now, a lithium ion secondary battery according to embodiments of the invention will be described in more detail.

Terms or words used in the present specification and claims should not be construed as limited to ordinary or dictionary terms, and the present invention should be construed with meanings and concepts that are consistent with the technical idea of the present disclosure based on the principle that the inventors can appropriately define concepts of the terms to appropriately describe their own invention in the best way.

Unless defined otherwise, all technical and scientific terms used herein have the same meaning as commonly understood by one of ordinary skill in the art to which this invention belongs. The terms used herein are for the purpose of describing specific embodiments only and is not intended to limit the scope of the invention.

The singular forms "a," "an" and "the" used herein are intended to include plural forms, unless the context clearly indicates otherwise.

It should be understood that the terms "comprise," "include", "have", etc. are used herein to specify the presence of stated feature, region, integer, step, action, element and/or component, but do not preclude the presence or addition of other feature, region, integer, step, action, element, component and/or group.

While the present invention can be modified in various ways and take on various alternative forms, specific embodiments thereof are illustrated and described in detail below. However, it should be understood that there is no intent to limit the present invention to the particular forms disclosed, but on the contrary, the present invention covers all modifications, equivalents, and alternatives falling within the spirit and scope of the present invention.

In describing a position relationship, for example, when the position relationship is described as 'upon~', 'above~', 'below~', and 'next to~', one or more other portions may be arranged between two portions unless 'just' or 'direct' is used.

In describing a time relationship, for example, when the temporal order is described as 'after~', 'subsequent~', 'next~', and 'before~', a case which is not continuous may be included unless 'just' or 'direct' is used.

As used herein, the term 'at least one' should be understood to include any and all combinations of one or more of the associated listed items.

According to one embodiment of the invention, there is provided a lithium ion secondary battery comprising:
a negative electrode portion;
a porous layer formed on at least one surface of the negative electrode portion, and including a polymer binder and inorganic fine particles dispersed in the polymer binder; and
a positive electrode portion bonded onto the porous layer through an adhesive portion arranged continuously or discontinuously,
wherein the adhesive portion includes an ionic conductive polymer, and
wherein the ratio of the area occupied by the adhesive portion is 0.02% to 50% based on the area of one surface of the positive electrode portion.

As a result of intensive research, the present inventors have found that a lithium ion secondary battery satisfying the above configuration can exhibit excellent adhesion durability between electrodes without impairing ionic conductivity between electrodes.

The lithium ion secondary battery comprises an electrode assembly in which the negative electrode portion, the porous layer, and the positive electrode portion are sequentially stacked. In particular, in the electrode assembly, the negative electrode portion is integrated with the porous layer, and the positive electrode portion is bonded to the porous layer through the adhesive portion.

Preferably, the negative electrode portion includes a negative electrode active material layer formed on at least one surface of the negative electrode current collector, and the porous layer is formed on the negative electrode active material layer. The positive electrode portion includes a positive electrode active material layer formed on at least one surface of the positive electrode current collector, and the porous layer and the positive electrode active material layer are bonded through the adhesive portion.

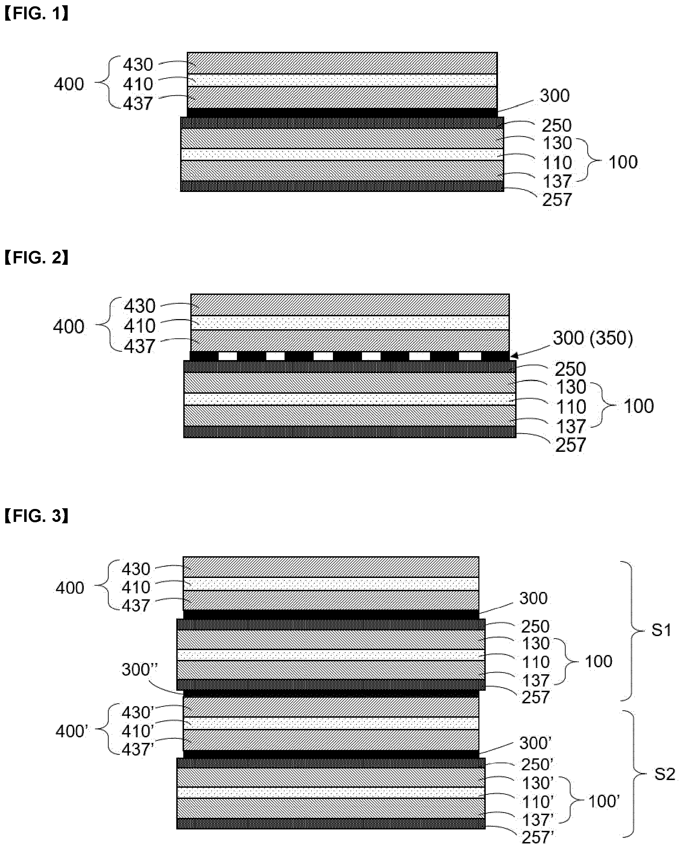

FIGS. 1 and 2 are cross-sectional views of electrode assemblies according to embodiments of the invention, respectively.

Referring to FIGS. 1 and 2, the negative electrode portion 100 may include negative electrode active material layers 130 and 137 formed on both surfaces of the negative electrode current collector 110. The porous layers 250 and 257 are formed on the negative electrode portion, and are preferably integrally stacked on the negative electrode active material layers 130 and 137.

The positive electrode portion 400 may include positive electrode active material layers 430 and 437 formed on both surfaces of the positive electrode current collector 410. The positive electrode portion 400 is bonded to the porous layer 250 of the negative electrode portion 100 through an adhesive portion 300 that is arranged continuously or discontinuously.

According to an embodiment of the invention, the area of the region where the adhesive portion is arranged is preferably 0.02% to 50% based on the area of one surface of the positive electrode portion.

Specifically, the ratio of the area occupied by the adhesive portion may be 0.02% or more, or 0.05% or more, or 0.1% or more, or 0.5% or more; and 50% or less, or 40% or less, or 30% or less, or 20% or less, or 10% or less based on the area of one surface of the positive electrode portion.

In order to sufficiently ensure an adhesive force between the negative electrode portion and the positive electrode portion by the adhesive portion, the ratio of the area occupied by the adhesive portion is preferably 0.02% or more, or 0.05% or more, or 0.1% or more, or 0.5% or more based on the area of one surface of the positive electrode portion. However, if the area occupied by the adhesive portion is excessive, the ionic conductivity between electrodes may decrease, and it is difficult for the electrolyte to smoothly penetrate into the porous layer, which may cause a capacity loss of the battery. Therefore, the ratio of the area occupied by the adhesive portion is preferably 50% or less, or 40% or less, or 30% or less, or 20% or less, or 10% or less based on the area of one surface of the positive electrode portion.

Preferably, the ratio of the area occupied by the adhesive portion may be 0.02% to 50%, or 0.05% to 50%, or 0.05% to 40%, or 0.1% to 40%, or 0.1% to 30%, or 0.5% to 30%, or 0.5% to 20%, or 0.5% to 10% based on the area of one surface of the positive electrode portion.

According to one embodiment, the adhesive portion 300 is arranged continuously or discontinuously.

In one example, the adhesive portion 300 is arranged continuously or discontinuously along the edge of the positive electrode portion 400. FIG. 4 shows an example in which the adhesive portion 300 is arranged continuously along the edge of the positive electrode portion 400. FIGS. 5 and 6 show examples in which the adhesive portion 300 is arranged discontinuously along the edge of the positive electrode portion 400.

The adhesive portion may be arranged with a constant width (w) along the edge of the positive electrode portion. Preferably, the adhesive portion may be arranged with a width (w) of 50 *µ*m to 700 *µ*m along the edge of the positive electrode portion.

Specifically, the width (w) of the adhesive portion may be 50 *µ*m or more, or 100 *µ*m or more, or 150 *µ*m or more, or 200 *µ*m or more; and 700 *µ*m or less, or 650 *µ*m or less, or 600 *µ*m or less, or 550 *µ*m or less.

In order to sufficiently ensure an adhesive force between the negative electrode portion and the positive electrode portion by the adhesive portion, the width(w) of the adhesive portion is preferably 50 *µ*m or more, or 100 *µ*m or more, or 150 *µ*m or more, or 200 *µ*m or more. However, if the area occupied by the adhesive portion is excessive, the ionic conductivity between electrodes may decrease, and it is difficult for the electrolyte to smoothly penetrate into the porous layer, which may cause a capacity loss of the battery. Therefore, the width(w) of the adhesive portion is preferably 700 *µ*m or less, or 650 *µ*m or less, or 600 *µ*m or less, or 550 *µ*m or less.

Preferably, the width (w) of the adhesive portion may be 50 *µ*m to 700 *µ*m, or 100 *µ*m to 700 *µ*m, or 100 *µ*m to 650 *µ*m, or 150 *µ*m to 650 *µ*m, or 150 *µ*m to 600 *µ*m, or 200 *µ*m to 600 *µ*m, or 200 *µ*m to 550 *µ*m.

When the adhesive portion is arranged discontinuously along the edge of the positive electrode portion, the adhesive portion may be arranged at regular or irregular intervals (d). Preferably, the distance(d) between the adhesive portions may be 0.1 mm or more, or 0.5 mm or more, or 1 mm or more; and 20 mm or less, or 15 mm or less, or 10 mm or less.

In order to allow the electrolyte to sufficiently permeate into the porous layer, the distance(d) between the adhesive portions is preferably 0.1 mm or more, 0.5 mm or more, or 1 mm or more. However, if the distance between the adhesive portions is excessive, the adhesive force between the negative electrode portion and the positive electrode portion may decrease. Therefore, the distance (d) between the adhesive portions is preferably 20 mm or less, or 15 mm or less, or 10 mm or less.

Preferably, the distance (d) between the adhesive portions may be 0.1 mm to 20 mm, or 0.5 mm to 20 mm, or 0.5 mm to 15 mm, or 1 mm to 15 mm, or 1 mm to 10 mm.

In another example, the adhesive portion may be the form of an adhesive portion pattern including two or more adhesive portion units.

The adhesive portion pattern 350 is a pattern in which a plurality of adhesive portion units are arranged at predetermined intervals, and bonds the negative electrode portion integrated with the porous layer to the positive electrode portion.

In order to exhibit appropriate adhesive force between the negative electrode portion and the positive electrode portion through the adhesive portion pattern, the adhesive portion pattern preferably includes two or more or four or more adhesive portion units. The upper limit of the number of adhesive portion units included in the adhesive portion pattern is not particularly limited because it can be appropriately adjusted according to the areas of the negative electrode portion and the positive electrode portion.

According to one example, the adhesive portion units may each independently have one or more transversal cross-sectional shapes selected from the group consisting of a circle, an ellipse, a sector, a polygon, and a concave polygon.

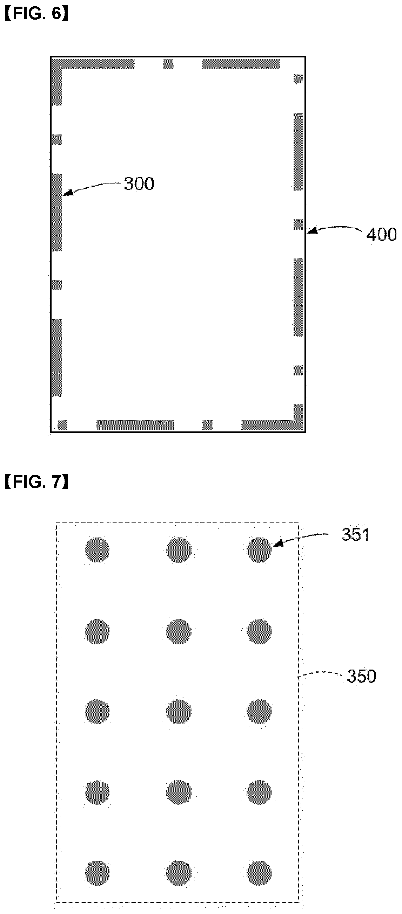

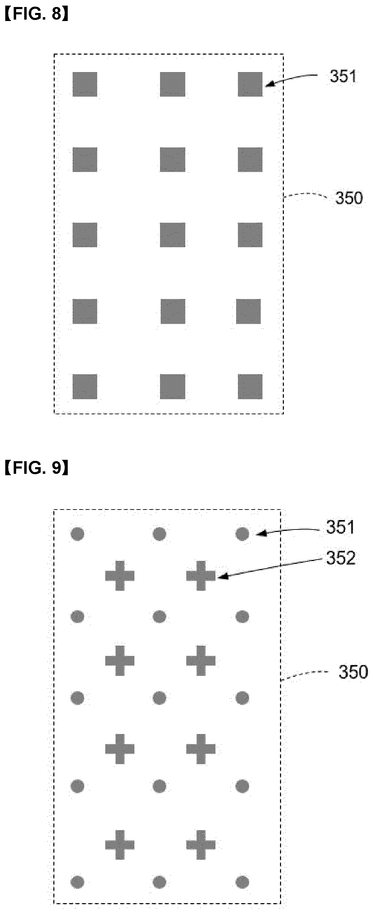

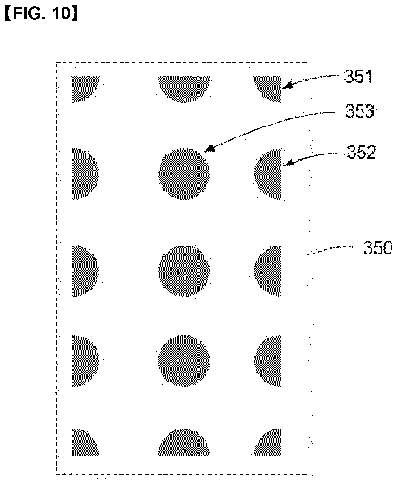

FIGS. 7 to 10 are transversal cross-sectional views of adhesive portion patterns according to embodiments of the invention, respectively. The adhesive portion pattern 350 shown in FIG. 7 is composed of adhesive portion units 351 having a circular cross section. The adhesive portion pattern 350 shown in FIG. 8 is composed of adhesive portion units 351 having a square cross section. The adhesive portion pattern 350 shown in FIG. 9 is composed of adhesive portion units 351 having a circular cross section and adhesive portion units 352 having a cross-shaped cross section. The adhesive portion pattern 350 shown in FIG. 10 is composed of adhesive portion units 351 having a quarter-circular cross section, adhesive portion units 352 having a semi-circular cross section, and adhesive portion units 353 having a circular cross section. FIGS. 7 to 10 illustrate a part of the adhesive portion pattern, in which the adhesive portion pattern may expand according to the area of the negative electrode portion and the positive electrode portion, and the number of adhesive portion units may increase.

In order to exhibit uniform adhesive force through the adhesive portion pattern 350, the adhesive portion pattern is preferably a pattern in which the center part of each adhesive portion unit is arranged at equal intervals.

Here, the center part of the adhesive portion unit may be determined based on its transversal cross section. In one example, the center part of a circular cross section may be the center of a circle. In another example, the center part of an elliptical cross section may be a point where the major axis and minor axis of the ellipse intersect. In yet another example, the center part of a sector-shaped cross section such as a quarter-circle or a semi-circle may be the center of a circle being inscribed in the transversal cross section. In yet another example, the center part of a transversal cross section that is a polygon or concave polygon may be the center of a circle being circumscribed to the transversal cross section.

The adhesive portion pattern 350 may include adhesive portion units that have two or more transversal cross-sectional shapes selected from the group consisting of a circle, an ellipse, a sector, a polygon, and a concave polygon.

Here, the adhesive portion units having mutually the same cross-sectional shape may have their center parts arranged at equal intervals. In one example, in FIG. 9, the adhesive portion units 351 having a circular cross section are arranged at equal intervals based on the center part thereof. And, independently, the adhesive portion units 352 having a cross-shaped cross section are arranged at equal intervals based on the center part thereof.

The transversal cross section of the adhesive portion units may have a major axis diameter of 200 nm to 5000 *µ*m.

Here, the major axis diameter may be determined as follows based on the transversal cross-sectional shape of the adhesive portion units. In one example, the major axis diameter of a circular cross section means the diameter of the circle. In another example, the major axis diameter of an elliptical cross section means the major axis length of the ellipse. In another example, the major axis diameter of a sector-shaped cross section such as a quarter-circle or a semi-circle means the length of a line segment connecting two points where two radii and an arc meet. In yet another example, the major axis diameter of a transversal cross section that is a polygon or concave polygon means the diameter of a circle circumscribed to the transversal cross section.

According to an embodiment of the invention, the adhesive portion includes an ionic conductive polymer.

The ionic conductive polymer is a compound that enables movement of ion while having electrochemically stable properties and appropriate adhesive property. An ionic conductive polymer can be applied to the adhesive portion, thereby minimizing the loss of battery capacity due to the adhesive portion.

Preferably, the ionic conductive polymer may be one or more compounds selected from the group consisting of cyanoethylated polyvinyl alcohol, cyanoethyl cellulose, polyacrylonitrile, polyvinylpyrrolidone, polyethylene oxide, polyvinylidene fluoride, polyvinylidene fluoride-hexafluoropropylene, polyvinylidene fluoride-trichloroethylene, polymethyl methacrylate, polyacrylonitrile-styrene copolymer, polyvinyl chloride, polyvinyl acetate, polyethylene vinyl acetate copolymer, cyanoethyl pullulan, cyanoethyl sucrose, pullulan, cellulose acetate, cellulose acetate butyrate, cellulose acetate propionate, polyethylene glycol, polyethylene glycol dimethyl ether, and carboxymethyl cellulose.

The adhesive portion may further include a lithium salt.

A lithium salt can be applied along with an ionic conductive polymer to the adhesive portion, thereby exhibiting further improved ionic conductivity.

The lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(SO₂F)₂ (hereinafter referred to as LiFSI), LiN(CF₃SO₂)₂ (hereinafter referred to as LiTFSI), LiCl, Lil, LiB(C₂O₄)₂, and the like. Preferably, the lithium salt may be LiPF₆, LiFSI, LiTFSI, and a mixture thereof.

The lithium salt may be contained in an amount of 0.1 to 5 parts by weight based on 100 parts by weight of the ionic conductive polymer. The lithium salt included in the above content range can exhibit an appropriate ionic conductivity-improving effect suitable for the adhesive portion.

Meanwhile, the positive electrode portion can be obtained by coating a positive electrode material, which is a mixture of a positive electrode active material, a conductive material and a binder, onto at least one surface of a positive electrode current collector, and then drying it to form the positive electrode active material layer.

As the positive electrode current collector, those known in the technical field to which the present invention belongs to have conductivity without causing a chemical change in the secondary battery can be used. In one example, the positive electrode current collector may include stainless steel; aluminum; nickel; titanium; fired carbon; or aluminum or stainless steel whose surface is treated with carbon, nickel, titanium, silver, or the like.

Preferably, the positive electrode collector may generally have a thickness of 3 *µ*m to 500 *µ*m. The positive electrode current collector may have fine protrusions and depressions formed on a surface thereof to enhance an adhesive force with a positive electrode active material. The positive electrode current collector may be used in various forms such as a film, a sheet, a foil, a net, a porous body, a foaming body, and a non-woven fabric structure.

The positive electrode active material can be used without particular limitation as long as it is a material capable of reversibly intercalating/deintercalating lithium ions. In one example, the positive electrode active material may be a composite oxide or phosphate containing cobalt, manganese, nickel, iron, or a combination of lithium and these metals.

In another example, the positive electrode active material may be a compound represented by any one of the following chemical formulas: LiₐA_{1-b}R_{b}D₂ (0.90≤a≤1.8, 0≤b≤0.5); LiₐE_{1-b}R_{b}O_{2-c}D_{c} (0.90≤a≤1.8, 0≤b≤0.5, 0≤c≤0.05); LiE_{2-b}R_{b}O_{4-c}D_{c} (0≤b≤0.5, 0≤c≤0.05); LiₐNi_{1-b-c}Co_{b}R_{c}D_{d} (0.90≤a≤1.8, 0≤b≤0.5, 0≤c≤0.05, 0<d≤2); LiₐNi_{1-b-c}Co_{b}R_{c}O_{2-d}Z_{d} (0.90≤a≤1.8, 0≤b≤0.5, 0≤c≤0.05, 0<d<2); LiₐNi_{1-b-c}Co_{b}R_{c}O_{2-d}Z₂ (0.90≤a≤1.8, 0≤b≤0.5, 0≤c≤0.05, 0<d<2); LiₐNi_{1-b-c}Mn_{b}R_{c}D_{d} (0.90≤a≤1.8, 0≤b≤0.5, 0≤c≤0.05, 0<d≤2); LiₐNi_{1-b-c}Mn_{b}R_{c}O_{2-d}Z_{d} (0.90≤a≤1.8, 0≤b≤0.5, 0≤c≤0.05, 0<d<2); LiₐNi_{1-b-c}Mn_{b}R_{c}O_{2-d}Z₂ (0.90≤a≤1.8, 0≤b≤0.5, 0≤c≤0.05, 0<d<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}Mn_{d}G_{c}O₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiTO₂; LiNiVO₄; Li_{(3-f)}J₂(PO₄)₃ (0≤f≤2); Li_{(3-f)}Fe₂(PO₄)₃ (0≤f≤2); and LiFePO₄.

In the above chemical formulas, A is Ni, Co, Mn or a combination thereof; R is Al, Ni, Co, Mn, Cr, Fe, Mg, Sr, V, a rare earth element or a combination thereof; D is O, F, S, P or a combination thereof; E is Co, Mn or a combination thereof; Z is F, S, P or a combination thereof; G is Al, Cr, Mn, Fe, Mg, La, Ce, Sr, V or combinations thereof; Q is Ti, Mo, Mn or a combination thereof; T is Cr, V, Fe, Sc, Y or a combination thereof; and J is V, Cr, Mn, Co, Ni, Cu or combinations thereof.

Of course, those having a coating layer on the surface of the positive electrode active material can be used, or a mixture of the positive electrode active material and a positive electrode active material having a coating layer can be used. As the coating element included in the coating layer, Mg, Al, Co, K, Na, Ca, Si, Ti, V, Sn, Ge, Ga, B, As, Zr, or a mixture thereof can be used.

According to one embodiment, the positive electrode active material may be contained in an amount of 80% to 95% by weight based on the total weight of the positive electrode material. Preferably, the content of the positive electrode active material may be 82% by weight to 95% by weight, or 82% by weight to 93% by weight, or 85% by weight to 93% by weight, or 85% by weight to 90% by weight, based on the total weight of the positive electrode material.

The thickness of the positive electrode active material layer can be determined within a range that does not impair the electrical characteristics of the lithium ion secondary battery. As a non-limiting example, the positive electrode active material layer may have a thickness of 10 *µ*m to 500 *µ*m.

The conductive material can be used for imparting conductivity to the electrode.

The conductive material can be used without particular limitation as long as it has electronic conductivity without causing a chemical change in the battery. As a non-limiting example, the conductive material may include carbon-based materials such as carbon black, acetylene black, ketjen black, channel black, furnace black, lamp black, thermal black and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative. As the conductive material, any one alone or a mixture of two or more of the above-mentioned examples may be used.

The content of the conductive material may be adjusted within a range that does not cause a decrease in capacity of the battery while exhibiting an appropriate level of conductivity. Preferably, the content of the conductive material may be 1% by weight to 10% by weight, or 1% by weight to 5% by weight based on the total weight of the positive electrode material.

The binder is used for properly attaching the positive electrode material to the positive electrode current collector.

As a non-limiting example, the binder may include polyvinyl alcohol, polyacrylate, carboxymethyl cellulose, hydroxypropyl cellulose, diacetylcellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon resin, and the like. As the binder, one or a mixture of two or more of the examples described above may be used.

The content of the binder may be adjusted within a range that does not cause a decrease in capacity of the battery while exhibiting an appropriate level of adhesive property. Preferably, the content of the binder may be 1% by weight to 10% by weight, or 1% by weight to 5% by weight based on the total weight of the positive electrode material.

The negative electrode portion and the porous layer can be obtained by a method in which a negative electrode material, which is a mixture of a negative electrode active material, a conductive material, and a binder, is coated onto at least one surface of the negative electrode current collector, and then dried to form a negative electrode active material layer; and a mixture containing a polymer binder and inorganic fine particles is coated onto the negative electrode active material layer and dried to form a porous layer.

The negative electrode current collector included in the negative electrode portion is replaced with those described in the positive electrode current collector. In addition, the conductive material and binder included in the negative electrode portion are replaced with those described in the positive electrode portion.

The negative electrode active material may include a material capable of reversibly intercalating and deintercalating lithium ions, a lithium metal, a lithium metal alloy, a material capable of doping and dedoping lithium, and a transition metal oxide.

As the material capable of reversibly intercalating and de-intercalating lithium ions, crystalline carbon, amorphous carbon, or a mixture thereof may be exemplified as a carbonaceous material. Specifically, the carbonaceous material may be natural graphite, artificial graphite, Kish graphite, pyrolytic carbon, mesophase pitches, mesophase pitch-based carbon fiber, meso-carbon microbeads, petroleum or coal tar pitch derived cokes, soft carbon, hard carbon, and the like.

The lithium metal alloy may include an alloy of lithium and a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material capable of doping and dedoping lithium may include Si, a Si-C composite, SiOₓ (0<x<2), a Si-Q alloy (wherein Q is an element selected from the group consisting of alkali metals, alkali earth metals, group 13 elements, group 14 elements, group 15 elements, group 16 elements, transition metals, rare earth elements, and a combination thereof, but is not Si), Sn, SnO₂, Sn-R (wherein R is an element selected from the group consisting of alkali metals, alkali earth metals, group 13 elements, group 14 elements, group 15 elements, group 16 elements, transition metals, rare earth elements, and a combination thereof, but is not Sn), and the like. In addition, as the material capable of doping and dedoping lithium, at least one of the above examples can also be mixed with SiO₂ and then used. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and the like.

And, the transition metal oxide may include vanadium oxide, lithium vanadium oxide, lithium titanium oxide, and the like.

Preferably, the negative electrode active material may include one or more compounds selected from the group consisting of a carbonaceous material and a silicon compound. Here, the carbonaceous material is a material containing at least one selected from the group consisting of natural graphite, artificial graphite, Kish graphite, pyrolytic carbon, mesophase pitches, mesophase pitch-based carbon fiber, meso-carbon microbeads, petroleum or coal tar pitch derived cokes, soft carbon, and hard carbon, as previously exemplified. In addition, the silicon compound may be a compound containing Si previously exemplified, that is, Si, a Si-C composite, SiOx (wherein 0<x<2), the Si-Q alloy, mixtures thereof, or a mixture of at least one thereof and SiO₂.

According to one embodiment, the negative electrode active material may be contained in an amount of 85% by weight to 98% by weight based on the total weight of the negative electrode material. Preferably, the content of the negative electrode active material may be 85% by weight to 97% by weight, or 87% by weight to 97% by weight, or 87% by weight to 95% by weight, or 90% by weight to 95% by weight based on the total weight of the negative electrode material.

The porous layer includes a polymer binder and inorganic fine particles dispersed in the polymer binder.

The polymer binder is gelled when swelled with a liquid electrolyte, and thus can show a high degree of swelling. The electrolyte injected after assembling a secondary battery penetrates into the polymer binder, and the polymer binder containing the electrolyte penetrated therein also has electrolyte ion conductivity. Therefore, a polymer having a solubility index of 15 to 45 MPa^{1/2} can be preferably used as the polymer binder.

In one example, the polymer binder may be one or more compounds selected from the group consisting of polyvinylidene fluoride, polyvinylidene fluoride-hexafluoropropylene, polyvinylidene fluoride-trichloroethylene, polyvinylidene fluoride-chlorotrifluoroethylene, polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethylcellulose, acrylonitrile-styrene-butadiene copolymer, ethylene-propylene-diene terpolymer, sulfonated ethylene-propylene-diene terpolymer, styrene butadiene rubber, fluororubber, and polyimide.

The inorganic fine particles form micropores by empty spaces between particles, maintain their physical form at high temperatures, and are electrochemically stable.

The inorganic fine particles preferably undergo no oxidation and/or reduction reactions in the operating voltage range of the secondary battery (e.g., 0 ~ 5V based on Li/Li+). The inorganic fine particles preferably have a high electrolyte ion transport capability. The inorganic fine particles preferably have a density as low as possible so that they can be well dispersed within the polymer binder. In addition, the inorganic fine particles preferably have a high dielectric constant so as to contribute to increasing the degree of dissociation of the electrolyte salt in the electrolyte.

Preferably, the inorganic fine particles may be one or more selected from the group consisting of inorganic particles having a dielectric constant of 1 or more, inorganic particles having piezoelectricity, and inorganic particles having lithium ion transport capability.

In one example, the inorganic particles such as SrTiOs, SnO₂, CeO₂, MgO, NiO, CaO, ZnO, ZrO₂, Y₂O₃, Al₂O₃, bohemite(AlO(OH)), Al(OH)₃, TiO₂, and SiC have a dielectric constant of 1 or more, and thus can be suitably applied as the inorganic fine particles.

In another example, the inorganic particles having piezoelectricity are nonconductors at normal pressure, but are materials that exhibit electrical conductivity due to changes in their internal structure when a certain pressure is applied. The piezoelectric inorganic particles have high dielectric constant characteristics with a dielectric constant of 100 or more. Further, they are positively (+) charged on one surface while being negatively (-) charged on the other surface, when they are stretched or compressed under the application of a certain range of pressure, thereby causing an electric potential difference between both surfaces thereof. Due to the above characteristics that the piezoelectric inorganic particles have, when an internal short circuit occurs in the electrode of a secondary battery due to external impacts, a positive electrode and a negative electrode can be prevented from being in direct contact with each other, and it is possible to gradually reduce voltage and improve safety. As the piezoelectric inorganic particles, inorganic particles such as BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃-PbTiO₃ (PMN-PT), and HfO₂ can be preferably applied.

In yet another example, the inorganic particle having the lithium ion transport capability refers to an inorganic particle that contains lithium element but has the function of moving lithium ions without storing lithium. The inorganic particles having lithium ion transport capability enable improvement of lithium ion conductivity in the battery. Examples of such inorganic particles include inorganic particles such as Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

Preferably, the inorganic fine particles may be one or more selected from the group consisting of SrTiOs, SnO₂, CeO₂, MgO, NiO, CaO, ZnO, ZrO₂, Y₂O₃, Al₂O₃, boehmite(AlO(OH)), Al(OH)₃, TiO₂, SiC, BaTiO₃, Pb(Zr,Ti)O₃, Pb₁₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

The inorganic fine particles preferably have a particle size of 0.001 *µ*m to 10 *µ*m. In order to ensure dispersibility in the porous layer, the inorganic fine particles preferably have a particle size of 0.001 *µ*m or more. However, if the particle size of the inorganic fine particles is too large, the thickness of the porous layer increases and the mechanical properties deteriorate, and an excessively large pore size may cause an internal short circuit during charge and discharge of the secondary battery. Therefore, the inorganic fine particles preferably have a particle size of 10 *µ*m or less.

The porous layer may include 10 to 99% by weight of the inorganic fine particles and 1 to 90% by weight of the polymer binder. In order to impart appropriate porosity and insulation property to the porous layer, the inorganic fine particles are preferably contained in an amount of 10% by weight or more. However, if the inorganic fine particles are contained in an excessive amount, the mechanical properties of the porous layer may decrease due to weakening of adhesive force. Therefore, the inorganic fine particles are preferably contained in an amount of 99% by weight or less.

Here, the cross-sectional areas of the negative electrode current collector, the negative electrode active material layer, and the porous layer may be the same. Alternatively, the cross-sectional area of the negative electrode active material layer and the porous layer may be 80% to 120% or 90% to 110% based on the cross-sectional area of the negative electrode current collector.

A method of bonding the positive electrode portion to the porous layer through the adhesive portion can be performed using a conventional stacking method. In one example, it can be performed by arranging the adhesive portion on one surface of either the porous layer or the positive electrode portion, and then stacking the other one thereon. The adhesive portion may be formed by methods such as coating, dispensing, transferring, depositing, printing, or spraying.

The thickness of the negative electrode active material layer, the porous layer, and the adhesive portion can be determined within a range that does not impair the electrical characteristics of a lithium ion secondary battery including the negative electrode. As a non-limiting example, the negative electrode active material layer may have a thickness of 10 *µ*m to 500 *µ*m; the porous layer may have a thickness of 5 *µ*m to 200 *µ*m; and the adhesive portion may have a thickness of 10 *µ*m to 300 *µ*m.

The area and ratio of the negative electrode portion and the positive electrode portion may vary depending on the type or shape of the battery. In one example, the size of the positive electrode portion may be the same as the size of the negative electrode portion. Alternatively, the size of the positive electrode portion may be smaller or larger than the size of the negative electrode portion. Preferably, the ratio of the cross-sectional area of the positive electrode portion based on the cross-sectional area of the negative electrode portion may be in the range of 0.7 to 1.0, or 0.8 to 1.0.

According to one embodiment, the lithium ion secondary battery may include a plurality of electrode assemblies as shown in FIG. 3.

Referring to FIG. 3, one electrode assembly unit S1 and another electrode assembly unit S2 may be bonded through an adhesive portion 300". Here, the electrode assembly unit S1 includes a negative electrode portion 100 integrated with the porous layers 250 and 257, and a positive electrode portion 400 bonded to the porous layer 250 through an adhesive portion 300. The electrode assembly unit S2 includes a negative electrode portion 100' integrated with the porous layers 250' and 257', and a positive electrode portion 400' bonded to the porous layer 250' through an adhesive portion 300'.

According to one embodiment of the invention, the lithium ion secondary battery may comprise an electrode assembly including the negative electrode portion, the porous layer and the positive electrode portion; an electrolyte; and a battery case that seals and stores the electrode assembly and the electrolyte.

As the lithium ion secondary battery comprises the above-mentioned electrode assembly, it can exhibit excellent durability and stable performance.

The lithium ion secondary battery can be used as an energy source having improved performance and safety in the field of portable electronic devices such as mobile phones, notebook computers, tablet computers, mobile batteries, and digital cameras; and the field of transport means such as electric vehicles, electric motorcycles, and personal mobility devices.

The lithium ion secondary battery may include the electrode assembly and a battery case in which the electrode assembly is built. Further, the electrode assembly may be impregnated with electrolyte.

The lithium ion secondary battery may have various shapes, such as a prismatic shape, a cylindrical shape, or pouch shape.

The electrolyte can be used without particular limitation as long as it is known to be applicable to lithium ion secondary batteries in the technical field to which the present invention pertains. For example, the electrolyte may be an organic liquid electrolyte, an inorganic liquid electrolyte, a solid polymer electrolyte, a gel-type polymer electrolyte, a solid inorganic electrolyte, a molten inorganic electrolyte, or the like.

Specifically, the electrolyte may include a non-aqueous organic solvent and a lithium salt.

The non-aqueous organic solvent can be used without particular limitation as long as it can serve as a medium through which ions involved in the electrochemical reaction of the battery can move.

Specifically, the non-aqueous organic solvent includes an ester-based solvent such as methyl acetate, ethyl acetate, γ-butyrolactone, and ε-caprolactone; an etherbased solvent such as dibutyl ether and tetrahydrofuran; a ketone-based solvent such as cyclohexanone; an aromatic hydrocarbon-based solvent such as benzene and fluorobenzene; a carbonate-based solvent such as dimethyl carbonate(DMC), diethyl carbonate(DEC), methyl ethyl carbonate(MEC), ethyl methyl carbonate(EMC), ethylene carbonate(EC), and propylene carbonate(PC); an alcohol-based solvent such as ethyl alcohol and isopropyl alcohol; nitriles such as R-CN (wherein R is a C2 to C20 linear, branched or cyclic hydrocarbon group, which may contain a doublebonded aromatic ring or an ether bond); amides such as dimethylformamide; dioxolanes such as 1,3-dioxolane; sulfolane, and the like.

Among the above examples, a carbonate-based solvent can be preferably used as the non-aqueous organic solvent.

In particular, considering the charge and discharge performance of the battery and compatibility with the sacrificial positive electrode material, the non-aqueous organic solvent may be preferably a mixture of a cyclic carbonate having high ionic conductivity and a high dielectric constant (e.g., ethylene carbonate and propylene carbonate) and a linear carbonate having low viscosity carbonates (e.g., ethyl methyl carbonate, dimethyl carbonate, and diethyl carbonate). In this case, mixing and using the cyclic carbonate and the linear carbonate at a volume ratio of 1:1 to 1:9 may be advantageous for achieving the above-mentioned performance.

In addition, as the non-aqueous organic solvent, a solvent in which ethylene carbonate(EC) and ethyl methyl carbonate(EMC) are mixed at a volume ratio of 1:2 to 1:10; or a solvent in which ethylene carbonate(EC), ethyl methyl carbonate(EMC) and dimethyl carbonate(DMC) are mixed in a volume ratio of 1~3:1~9:1 can be preferably used.

The lithium salt contained in the electrolyte is dissolved in the non-aqueous organic solvent and acts as a source of lithium ions in the battery, which enables basic operation of the lithium ion secondary battery and facilitates movement of lithium ions between the positive electrode and the negative electrode.

The lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiFSI, LiTFSI, LiCl, Lil, and LiB(C₂O4)₂, and the like. Specifically, the lithium salt may be LiPF₆, LiFSI, LiTFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Optionally, the electrolyte may contain additives for the purpose of improving battery life characteristics, suppressing decrease of capacity in the battery, improving battery discharge capacity, and the like.

For example, the additive may include a haloalkylene carbonate-based compound such as difluoroethylene carbonate; or pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride, and the like. The additive may be contained in an amount of 0.1% by weight to 5% by weight with respect to the total weight of the electrolyte.

### [ADVANTAGEOUS EFFECTS]

According to the present invention, an electrode assembly for a lithium ion secondary battery which has excellent adhesion durability without impairing ionic conductivity between electrodes, and a secondary battery including the same are provided.

### [BRIEF DESCRIPTION OF THE DRAWINGS]

FIGS. 1 to 3 are cross-sectional views of electrode assemblies according to embodiments of the invention, respectively.

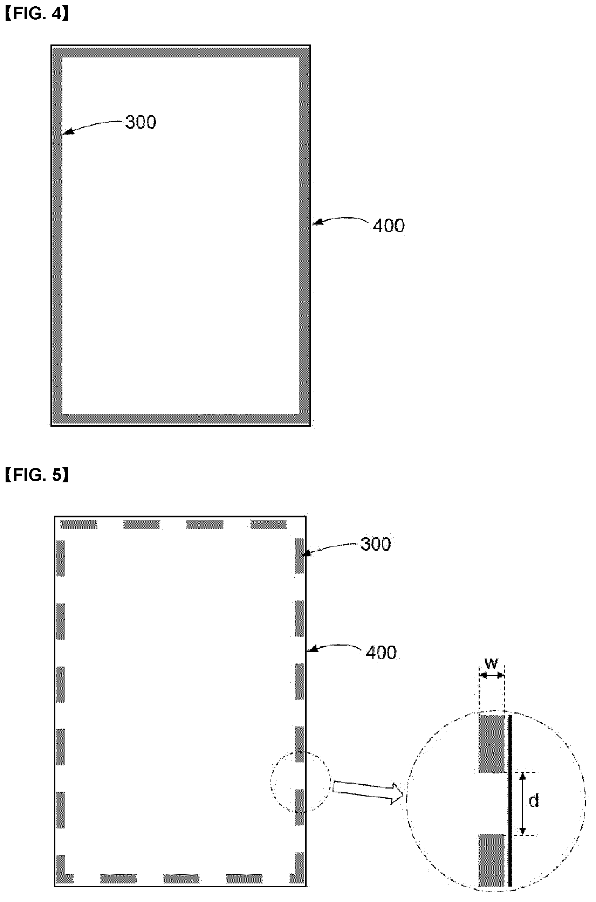

FIGS. 4 to 6 are cross-sectional views of adhesive portions according to embodiments of the invention, respectively.
FIGS. 7 to 10 are cross-sectional views of adhesive portion patterns according to embodiments of the invention, respectively.

### <Explanation of Symbols>

100, 100': negative electrode portion
110, 110': negative electrode current collector
130, 130', 137, 137': negative electrode active material layer
250, 250', 257, 257': porous layer
300, 300', 300": adhesive portion
w: width of adhesive portion
d: distance between adhesive portions
350: adhesive portion pattern
351, 352, 353: adhesive portion unit
400, 400': positive electrode portion
410, 410': positive electrode current collector
430, 430', 437, 437': positive electrode active material layer
S1, S2: electrode assembly unit

### [DETAILED DESCRIPTION OF THE EMBODIMENTS]

Hereinafter, actions and effects of the invention will be described in more detail with reference to specific examples of the invention. However, this is presented as an example to aid in the understanding of the invention. The following examples are not intended to limit the scope of the invention in any way. It would be obvious to those skilled in the art that various changes and modifications can be made within the scope and technical spirit of the invention.

### Example 1

An aqueous active material slurry composed of: 86 parts by weight of graphite active material in which artificial graphite and natural graphite were mixed in a ratio of 3:7, 7 parts by weight of acetylene black as a conductive material, and 7 parts by weight of SBR (styrene butadiene rubber) as a binder, was prepared. The active material slurry was coated onto one surface of a copper current collector (thickness 100 *µ*m, width 50 mm, length 90 mm) using a comma coater and dried. Then, it was similarly coated onto the other surface of the current collector and dried. This was rolled to form a negative electrode active material layer (thickness 50 *µ*m) with a porosity of 24%.

Aluminum oxide powder (average particle size 400 nm) was added to a 10 wt.% polyvinylidene fluoride (PVDF) solution using N-methyl-2-pyrrolidinone (NMP) as a solvent, and bead milling was performed to prepare an inorganic fine particle dispersion. Here, the weight ratio of the aluminum oxide and PVDF was 90:10.

The inorganic fine particle dispersion was coated onto the negative electrode active material layer to a thickness of 20 *µ*m using a doctor blade, and then dried at 100°C for 5 minutes to prepare a negative electrode-integrated porous layer.

An adhesive portion solution was prepared in which the adhesive portion (cyanoethylated polyvinyl alcohol; Mw 50,000 g/mol; manufactured by ECO Chemical) was dispersed at a solid content concentration of 20 wt.%. An adhesive portion dot pattern (a pattern consisting of adhesive portion units with a circular cross section; adhesive portion pattern width 45 mm, length 80 mm; a total of 45 adhesive portion units with a radius of 1 mm and a thickness of 100 *µ*m arranged in 5*9) was formed on the porous layer using the adhesive portion solution.

94 parts by weight of LiNiCoMnO₂ (Ni:Co:Mn=8:1:1) as a positive electrode active material, 3 parts by weight of a conductive carbon black (Super P; IMERYS Graphite & Carbon) as a conductive material, and 3 parts by weight of polyvinylidene fluoride as a binder were mixed, and the mixture was added to NMP to prepare a uniformly dispersed slurry. The slurry was coated to a thickness of 50 *µ*m onto both surfaces of an aluminum current collector (thickness 100 *µ*m), which was then dried and rolled to prepare a positive electrode plate. The positive electrode plate was punched using a mold punching machine to prepare a positive electrode portion (width 47.5 mm, length 81 mm).

The positive electrode portion was located on the porous layer on which the adhesive portion dot pattern was formed, and was adhered through the adhesive portion dot pattern to manufacture an electrode assembly. Here, the ratio of the area occupied by the adhesive portion dot pattern based on the area of one surface of the positive electrode portion was 3.14%.

The electrode assembly was stored in a pouch to form a small-sized cell, and electrolyte was injected into the pouch to produce a lithium ion secondary battery stack cell.

At this time, as the electrolytic solution, a solution was used in which 1.0 M LiPF₆ and 2 wt.% vinylene carbonate(VC) were dissolved in a non-aqueous organic solvent mixed with ethylene carbonate(EC), ethyl methyl carbonate(EMC) and diethyl carbonate(DEC) in a volume ratio of 1:2:1.

### Example 2

A lithium ion secondary battery stack cell was produced in the same manner as in Example 1, except that by reducing the diameters of the adhesive portion units in the adhesive portion dot pattern, the ratio of the area occupied by the adhesive portion dot pattern was 1.0%.

### Example 3

A lithium ion secondary battery stack cell was produced in the same manner as in Example 1, except that by increasing the diameters of the adhesive portion units in the adhesive portion dot pattern, the ratio of the area occupied by the adhesive portion dot pattern was 7.0%.

### Example 4

A lithium ion secondary battery stack cell was produced in the same manner as in Example 1, except that the adhesive portion solution was continuously coated with a width of 0.5 mm along the edge of the positive electrode portion using a dispensing device. Here, the ratio of the area occupied by the adhesive portion based on the area of one surface of the positive electrode portion was 3.31%.

### Example 5

A lithium ion secondary battery stack cell was produced in the same manner as in Example 4, except that by reducing the width of the adhesive portion solution, which was continuously coated along the edge of the positive electrode portion using a dispensing device, the ratio of the area occupied by the adhesive portion was 1.0%.

### Example 6

A lithium ion secondary battery stack cell was produced in the same manner as in Example 4, except that by increasing the width of the adhesive portion solution, which was continuously coated along the edge of the positive electrode portion using a dispensing device, the ratio of the area occupied by the adhesive portion was 7.0%.

### Comparative Example 1

A lithium ion secondary battery stack cell was produced in the same manner as in Example 1, except that by reducing the diameters of the adhesive portion units in the adhesive portion dot pattern, the ratio of the area occupied by the adhesive portion dot pattern was 0.01%.

However, in Comparative Example 1, the positive electrode portion was not adhered to the porous layer, thereby making it impossible to assemble the lithium ion secondary battery stack cell.

### Comparative Example 2

A lithium ion secondary battery stack cell was produced in the same manner as in Example 1, except that by increasing the diameters of the adhesive portion units in the adhesive portion dot pattern, the ratio of the area occupied by the adhesive portion dot pattern was 52%.

### Experiment Example

The lithium ion secondary battery stack cells obtained in Examples and Comparative Examples were charged at 0.1 C in a CC-CV mode at 25°C until the voltage reached 4.2 V, and the voltage was maintained in a CV mode until it reached 0.05 C. Subsequently, activation was performed by discharging to 2.5 V at 0.1 C. Then, high rate discharge characteristics were confirmed by charging at 0.33C until it reaches 4.2V and discharging to 2.5V at 0.1C, 0.33C, 1C, 2C, 3C. The following values are the ratios calculated based on the 0.1C capacity in Example 1.

**[Table 1]**

| C-rate evaluation | 0.1C | 0.33C | 1C | 2C | 3C |
|---|---|---|---|---|---|
| Example 1 | 100 % | 99 % | 96 % | 90 % | 75 % |
| Example 2 | 100 % | 99.5 % | 97 % | 91 % | 76 % |
| Example 3 | 100 % | 98 % | 95 % | 89 % | 74 % |
| Example 4 | 100 % | 99 % | 96 % | 90 % | 75 % |
| Example 5 | 100 % | 99.5 % | 97 % | 91 % | 76 % |
| Example 6 | 100 % | 98 % | 95 % | 89 % | 74 % |
| Comparative Example 1 | - | - | - | - | - |
| Comparative Example 2 | 98 % | 95 % | 92 % | 82 % | 61 % |

Referring to Table 1, it was confirmed that the lithium ion secondary batteries of Examples exhibited excellent adhesion durability and high-rate discharge characteristics compared to Comparative Examples.

In Comparative Example 1, the positive electrode portion was not adhered to the porous layer, thereby making it impossible to assemble a lithium ion secondary battery stack cell. The lithium ion secondary battery of Comparative Example 2 exhibited inferior high-rate discharge characteristics compared to Examples.

While the present invention has been described in detail with reference to specific embodiments and illustrative drawings, the present invention is not limited thereto, and it will be apparent to those skilled in the art that various changes and modifications can be made within the spirit and scope of the disclosure as defined by the appended claims.

## Claims

1. A lithium ion secondary battery comprising:
a negative electrode portion;
a porous layer formed on at least one surface of the negative electrode portion, and including a polymer binder and inorganic fine particles dispersed in the polymer binder; and
a positive electrode portion bonded onto the porous layer through an adhesive portion arranged continuously or discontinuously,
wherein the adhesive portion includes an ionic conductive polymer, and
wherein the ratio of the area occupied by the adhesive portion is 0.02% to 50% based on the area of one surface of the positive electrode portion.

2. The lithium ion secondary battery of claim 1, wherein the ionic conductive polymer is one or more compounds selected from the group consisting of cyanoethylated polyvinyl alcohol, cyanoethyl cellulose, polyacrylonitrile, polyvinylpyrrolidone, polyethylene oxide, polyvinylidene fluoride, polyvinylidene fluoride-hexafluoropropylene, polyvinylidene fluoride-trichloroethylene, polymethyl methacrylate, polyacrylonitrile-styrene copolymer, polyvinyl chloride, polyvinyl acetate, polyethylene vinyl acetate copolymer, cyanoethyl pullulan, cyanoethyl sucrose, pullulan, cellulose acetate, cellulose acetate butyrate, cellulose acetate propionate, polyethylene glycol, polyethylene glycol dimethyl ether, and carboxymethyl cellulose.

3. The lithium ion secondary battery of claim 1, wherein the adhesive portion further comprises a lithium salt.

4. The lithium ion secondary battery of claim 1, wherein the adhesive portion is arranged continuously or discontinuously along the edge of the positive electrode portion.

5. The lithium ion secondary battery of claim 1, wherein the adhesive portion is arranged with a width of 50 *µ*m to 700 *µ*m along the edge of the positive electrode portion.

6. The lithium ion secondary battery of claim 1, wherein the adhesive portion is arranged at discontinuous and regular intervals or discontinuous and irregular intervals along the edge of the positive electrode portion.

7. The lithium ion secondary battery of claim 1, wherein the adhesive portion includes an adhesive portion pattern including two or more adhesive portion units.

8. The lithium ion secondary battery of claim 7, wherein the adhesive portion units each independently have one or more transversal cross-sectional shapes selected from the group consisting of a circle, an ellipse, a sector, a polygon, and a concave polygon.

9. The lithium ion secondary battery of claim 7, wherein the adhesive portion pattern is a pattern in which the center part of each adhesive portion unit is arranged at equal intervals.

10. The lithium ion secondary battery of claim 7, wherein the transversal crosssection of the adhesive portion units has a major axis diameter of 200 nm to 5000 *µ*m.

11. The lithium ion secondary battery of claim 1, wherein:
the negative electrode portion includes a negative electrode active material layer formed on at least one surface of the negative electrode current collector, and
the porous layer is formed on the negative electrode active material layer.

12. The lithium ion secondary battery of claim 1, wherein:
the positive electrode portion includes a positive electrode active material layer formed on at least one surface of the positive electrode current collector, and
the porous layer and the positive electrode active material layer are bonded through the adhesive portion.

13. The lithium ion secondary battery of claim 1, wherein the polymer binder is one or more selected from the group consisting of polyvinylidene fluoride, polyvinylidene fluoride-hexafluoropropylene, polyvinylidene fluoride-trichloroethylene, polyvinylidene fluoride-chlorotrifluoroethylene, polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethylcellulose, acrylonitrile-styrene-butadiene copolymer, ethylene-propylene-diene terpolymer, sulfonated ethylene-propylene-diene terpolymer, styrene butadiene rubber, fluororubber, and polyimide.

14. The lithium ion secondary battery of claim 1, wherein the inorganic fine particles are one or more selected from the group consisting of SrTiOs, SnO₂, CeO₂, MgO, NiO, CaO, ZnO, ZrO₂, Y₂O₃, Al₂O₃, boehmite(ALO(OH)), Al(OH)₃, TiO₂, SiC, BaTiO₃, Pb(Zr,Ti)O₃, Pb₁₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

15. The lithium ion secondary battery of claim 1, wherein the inorganic fine particles have a particle size of 0.001 *µ*m to 10 *µ*m.

16. The lithium ion secondary battery of claim 1, wherein the porous layer includes 10 to 99% by weight of the inorganic fine particles and 1 to 90% by weight of the polymer binder.

17. The lithium ion secondary battery of claim 1, comprising:
an electrode assembly including the negative electrode portion, the porous layer and the positive electrode portion;
an electrolyte; and
a battery case that seals and stores the electrode assembly and the electrolyte.
